# FASCICULE DE BREVET EUROPEEN

(11) **EP 3 595 444 B1**
(45) Date de publication et mention de la délivrance du brevet: **18.08.2021**
(21) Numéro de dépôt: 18709024.6
(22) Date de dépôt: 12.03.2018
(51) Int. Cl.: A01N 37/40, A01N 25/08, A01N 25/10, A01N 25/14, A01N 25/26, A01N 31/08, A01N 33/02, A01N 37/10, A01N 43/16, A01N 43/38, A01N 43/90, A01P 13/00

(54) **TRAITEMENT ALGICIDE, ALGISTATIQUE, HERBICIDE ET HERBISTATIQUE DE L'EAU**
ALGIZIDE, ALGSTATISCHE, HERBIZIDE UND HERBISTATISCHE BEHANDLUNG VON WASSER
ALGICIDAL, ALGISTATIC, HERBICIDAL AND HERBISTATIC TREATMENT OF WATER

(30) Priorité: 15.03.2017 FR 1752102
(43) Date de publication de la demande: 22.01.2020
(73) Titulaire: Biocap Tech, 57240 Nilvange (FR)
(72) Inventeur: PIHAN, Jean-Claude, 57000 Metz (FR); CHOMEL DE VARAGNES, Loïc, 57000 Metz (FR)
(74) Mandataire: Office Freylinger
(86) Numéro de dépôt international: PCT/EP2018/056084
(87) Numéro de publication internationale: WO 2018/166973

(56) Documents cités:
- WO-A1-03/073856
- CN-A- 104 891 619
- CN-B- 104 671 367
- FR-A1- 2 979 188
- DATABASE CAPLUS [Online] CHEMICAL ABSTRACTS SERVICE, COLUMBUS, OHIO, US; WANG, HONGQIANG ET AL: "Preparation of sodium alginate /graphene oxide/gallic acid composite hydrogel ball algicide", XP002774132, extrait de STN Database accession no. 2015:1397613 & CN 104 860 383 A (HENAN UNIVERSITY OF URBAN CONSTRUCTION, PEOP. REP. CHINA) 26 août 2015 (2015-08-26)
- DATABASE WPI Week 199733 Thomson Scientific, London, GB; AN 1997-359074 XP002774133, & JP H09 151102 A (MEIJI MILK PROD CO LTD) 10 juin 1997 (1997-06-10)
- HU & HONG: "Algal-bloom control by allelopathy of aquatic macrophytes - A review", , 1 janvier 2008 (2008-01-01), XP055021638, DOI: 10.1007/s11783-008-0070-4 Extrait de l'Internet: URL:http://www.springerlink.com/content/6R 6214R315876841/fulltext.pdf [extrait le 2012-03-12]
- NAKAI S ET AL: "Algal growth inhibition effects and inducement modes by plant-producing phenols", WATER RESEARCH, ELSEVIER, AMSTERDAM, NL, vol. 35, no. 7, 1 mai 2001 (2001-05-01), pages 1855-1859, XP004230881, ISSN: 0043-1354, DOI: 10.1016/S0043-1354(00)00444-9
- DATABASE CAPLUS [Online] CHEMICAL ABSTRACTS SERVICE, COLUMBUS, OHIO, US; GUO, PEIYONG ET AL: "Effects of chitosan, gallic acid, and algicide on the physiological and biochemical properties of Microcystis flos-aquae", XP002774134, extrait de STN Database accession no. 2015:834577 & GUO, PEIYONG ET AL: "Effects of chitosan, gallic acid, and algicide on the physiological and biochemical properties of Microcystis flos-aquae", ENVIRONMENTAL SCIENCE AND POLLUTION RESEARCH , 22(17), 13514-13521 CODEN: ESPLEC; ISSN: 0944-1344, 2015, DOI: 10.1007/S11356-015-4500-0 10.1007/S11356-015-4500-0
- DATABASE CAPLUS [Online] CHEMICAL ABSTRACTS SERVICE, COLUMBUS, OHIO, US; USENKO, O. M. ET AL: "Algicide properties of polyphenols depending on molecular structure", XP002774135, extrait de STN Database accession no. 2004:832497 & USENKO, O. M. ET AL: "Algicide properties of polyphenols depending on molecular structure", GIDROBIOLOGICHESKII ZHURNAL , 40(4), 97-105 CODEN: GBZUAM; ISSN: 0375-8990, 2004,
- M R UDDIN ET AL: "Herbicidal activity of phenolic compounds from hairy root cultures of Fagopyrum tataricum : Herbicidal activity of hairy root cultures of Fagopyrum tataricum", WEED RESEARCH., vol. 52, no. 1, 1 février 2012 (2012-02-01), pages 25-33, XP055410035, GB ISSN: 0043-1737, DOI: 10.1111/j.1365-3180.2011.00894.x
- DATABASE WPI Week 201679 Thomson Scientific, London, GB; AN 2016-59450L XP002774136, & CN 105 853 269 A (WANG L) 17 août 2016 (2016-08-17)

## Description

### Domaine technique

La présente invention concerne le domaine des compositions algicides et herbicides, les procédés de fabrication ainsi que les méthodes de traitement associées des strates de fonds aquatiques.

### Etat de la technique

Les algues sont communes et colonisent les eaux plus ou moins stagnantes, et exposées à la lumière. Leur prolifération est ainsi favorisée par la stagnation de l'eau, la forte concentration des nutriments, la décomposition de la matière organique au sein du milieu et la diminution des micropolluants. Les algues peuvent être divisées selon leur taille en micro-algues phytoplanctoniques réparties dans la masse d'eau et en macroalgues avec selon l'espace qu'elles occupent dans l'eau : les algues flottantes reposant à la surface, et les algues submergées fixées aux sédiments et désignées algues benthiques. Selon les conditions (courant, cycle de vie) les algues benthiques peuvent se décrocher du fond et devenir flottantes. Les algues benthiques se développent aussi bien en eau douce que dans les océans ou les mers. Les algues benthiques se répartissent entre plusieurs grands groupes ou classes selon la couleur et la nature de leurs pigments : Cyanobactéries communément appelées algues bleues (la nouvelle classification leur crée une appartenance propre en dehors des algues), Chlorophytes ou algues vertes dont des espèces filamenteuses subdivisées en Chlorophycées et Zygophycées, Chromophytes ou algues brunes à jaunes subdivisées en Xanthophycées ou algues jaunes et Phéophycées ou algues brunes, Diatomophycées (Bacillariophycées à squelette siliceux) et Chrysophycées ou algues dorées, Pyrrhophytes ou algues également brunes subdivisées en Cryptophycées et Dinophycées, Rhodophytes ou algues rouges (marines) enfin Euglénophytes faisant la transition entre le monde végétal et le monde animal en fonction de la présence ou non de chloroplastes. Les Cyanophycées comprennent des espèces unicellulaires ou des colonies du phytoplancton et des associations d'espèces benthiques formant des encroûtements sur le fond, pouvant se décoller et coloniser la surface en formant des flottants. Les Characées antérieurement classées dans les algues vertes (Chlorophycées) sont désormais considérées comme un groupe distinct faisant la transition entre les algues et les hydrophytes.

Les Bryophytes et les Ptéridophytes (mousses et fougères aquatiques) présentent des invasions dans certains milieux spécifiques.

Les hydrophytes, connues également sous le nom de macrophytes aquatiques, sont des types de plantes qui vivent en partie ou totalement immergées dans l'eau une bonne partie de l'année voire toute l'année. Les types biologiques différents sont définis suivant leur position par rapport à la surface de l'eau, on distingue notamment au sein de cette classe, les hydrophytes libres, flotteurs qui flottent à la surface (pleustophytes) et les hydrophytes fixés qui sont enracinés dans le sol. Ces dernières se subdivisent en plantes à feuilles flottantes (jusqu'à 3 m d'eau) (nénuphar) et plantes totalement immergées (élodée) et qui en atteignant la surface forment une canopée dense dans la strate d'eau de surface. L'introduction de certaines espèces exotiques, notamment l'élodée du Canada, dans les eaux a créé certains problèmes du fait de leur prolifération incontrôlable ; elles sont qualifiées d'espèces exotiques envahissantes (proliférantes) et elles ont un impact négatif sur la biodiversité autochtone. Certaines espèces indigènes (autochtones) peuvent présenter également des proliférations excessives avec, identiquement, une baisse de la diversité et la perte de certains usages des eaux. Par ailleurs la zone littorale présente une ceinture de plantes amphibies désignées « Hélophytes » (Roseaux, massettes, joncs, Carex). Définition : *« espèce exotique envahissante »* : une espèce exotique dont l'introduction ou la propagation s'est révélée constituer une menace pour la biodiversité et les services écosystémiques associés, ou avoir des effets néfastes sur la biodiversité et lesdits services.

Les proliférations des algues dénommées fleurs d'eau, efflorescences, blooms algaux, marées vertes, bleues ou rouges, ainsi que l'envahissement des milieux aquatiques par les bryophytes, les ptéridophytes et les herbiers de macrophytes ont de multiples impacts sur les différents usages de l'eau et sur l'écosystème. En particulier, on peut citer les effets sur la consommation d'eau potable. Lors de proliférations de cyanobactéries, l'eau devient particulièrement déplaisante au goût, à l'odeur et en apparence. La production de phycotoxines provoquant le plus souvent des intoxications alimentaires (hépatotoxines), mais aussi des maladies respiratoires, nerveuses (neurotoxines) et de la peau (dermatotoxines). Il y a donc un impact sur la santé publique et sur l'économie du à l'augmentation du coût du traitement de l'eau. Les proliférations algales ou de macrophytes affectent également les activités industrielles, la pêche et la production aquacole, et provoquent l'obstruction des voies navigables et l'accrochage des hameçons des pêcheurs dans les macrophytes et les chlorophycées filamenteuses.

Les proliférations des algues, des bryophytes, des ptéridophytes et de macrophytes qui sont une des conséquences de l'eutrophisation des eaux entrainent une production de biomasse avec destruction de nombreux biotopes. Il y a réduction importante de la transparence de l'eau donc de l'efficacité du rayonnement photosynthétique qui provoque la baisse de la diversité phytoplanctonique et conjointement zooplanctonique. Ceci entraine une multiplication des microorganismes décomposeurs et provoque un déficit prononcé de l'oxygénation par consommation excessive d'oxygène avec un risque d'asphyxie pour les poissons, il s'ensuit un enrichissement en matière organique du sédiment après décantation des végétaux morts puis une anoxie totale du fond, car l'activité de dégradation bactérienne exacerbée est consommatrice d'oxygène. Le relargage, du fait de l'anoxie du milieu aquatique, d'éléments nutritifs par les sédiments favorise également l'hyper-eutrophisation du milieu aquatique. Les efflorescences et encroûtements de cyanobactéries produisent une écume à odeur pestilentielle et libèrent par exemple de la géosmine donnant à la chair des poissons un mauvais goût de vase. La surabondance de végétaux aquatique en période estivale entraîne une uniformisation des faciès et peut constituer un obstacle à l'écoulement, source de débordement intempestif de la rivière. D'une façon générale les phénomènes de proliférations algales ou de macrophytes aquatiques entrainent la détérioration esthétique des plans d'eau et autres milieux aquatiques.

Pour lutter contre les proliférations des algues, de bryophytes, de ptéridophytes ou de macrophytes, plusieurs traitements ont déjà été envisagés. Ces traitements mettent principalement en œuvre des substances produites par la chimie de synthèse. Les algicides ou herbicides chimiques ayant été utilisés ou qui sont encore utilisés dans certains pays en milieu aquatique sont principalement à base de cuivre et de ses dérivés, de chlore et de ses dérivés, de peroxyde d'hydrogène, de brome, d'amines, de produits phytosanitaires, d'inhibiteurs d'hormones végétales. Les Directives Européennes sur les pesticides (Biocides et Phytosanitaires; Règlement Biocides N° 528-2012) restreignent ou interdisent l'usage de nombreuses substances nuisibles pour l'homme, les animaux et l'ensemble de l'écosystème, par exemple en milieu aquatique l'usage du cuivre et de ses dérivés, du TBT (tributylétain), des Diquat, Dichlobénil, Fluridone, Roundup et Monolinuron.

De plus, ces traitements chimiques ont été limités aux traitements d'algues qui se développent dans des milieux artificiels (chlore dans les piscines) et peu de sites naturels ont fait l'objet d'une application compte tenu du volume d'eau à traiter et des conséquences de l'utilisation de biocides chimiques de synthèse sur l'ensemble de l'écosystème. Aucun algicide ou herbicide naturel n'est employé actuellement en milieu aquatique.

Le brevet FR 2 979 188 divulgue une composition algicide, algistatique, herbicide ou herbistatique. La composition comprend un polymère absorbant ou encapsulant et un ou plusieurs polyphénol(s). L'invention concerne également l'utilisation de cette composition en tant qu'algicide, algistatique, herbicide ou herbistatique. L'invention a aussi trait aux procédés de fabrication de cette composition ainsi qu'à un dispositif comprenant un contenant fermé et filtrant contenant ladite composition algicide, algistatique, herbicide ou herbistatique, de préférence sous forme de microbilles, de billes, de granules, de particules, de cubes, de cylindres, de gel ou de fragments de gel. Un objet de la présente invention concerne également une méthode de traitement algicide, algistatique, herbicide ou herbistatique mettant en œuvre cette composition ou le dispositif comprenant ladite composition. Les demandes de brevets CN 104 860 383 A et CN 104 891 619 A divulguent des compositions algicides sous forme de sphères d'hydrogel comprenant de l'acide gallique permettant de contrôler les blooms algaux. La demande de brevet JPH 9151102 divulgue une composition antibiotique d'acide gallique comprenant un excipient ou un émulsifiant pour contrôler les algues se trouvant dans les rizières ou les lacs. Le brevet CN 104 671 367 B divulgue une composition algicide traitant l'efflorescence algale se produisant en surface des milieux aquatiques comprenant une substance allélochimique choisie parmi l'acide gallique, l'acide nonoïque ou la N-phényl-naphthylamine ainsi que du chitosan et de la poudre de brique autoclavée de cendres volante. L'article de Hu et al., intitulé "Algal-bloom controlby allelopathy of aquatic macrophytes - A review" in Front. Environ. Sci. Engin. China 2008, 2(4): 421-438 décrit l'utilisation de composés allélopathiques provenant des macrophytes afin de contrôler le bloom algal. L'article de Nakai et al., intitulé "Algal growth inhibition effects and inducement modes by plant-producing phenols" in Wat. Res. Vol. 35, No. 7, pp. 1855-1859, 2001, décrit l'effet inhibiteur de phénols issus de plantes. L'article de Guo et al., intitulé "Effects of chitosan, gallic acid, and algicide on the physiological and biochemical properties of Microcystis flos-aquae" in Environmental Science and Pollution Research (2015), 22(17), 13515-13521 décrit l'effet algicide de l'acide gallique combiné a du chitosan. L'article d'Usenko et al., intitulé "Algicide properties of polyphenols depending on molecular structure" in Gidrobiologicheskii Zhurnal (2004), 40(4), 97-105 décrit la relation entre la structure des polyphénols et leur influence sur les cyanobactéries et les algues. L'article de Uddin et al., intitulé "Herbicidal activity of phenolic compounds from hairy root cultures of Fagopyrum tataricum Gaertn." In Weed Research, 2012 décrit des composés allélopathiques issus d'une plante *Fagopyrum tataricum* ainsi que de leur phytotoxicité. La demande internationale WO 03/073856 A1 décrit l'utilisation d'un herbicide comprenant au moins un composé métallique tel que les ions Fe²⁺ ou Fe³⁺ et au moins un agent chélatant.

Ainsi, au vu de ces éléments, il existe un réel besoin de développer une méthode et/ou un produit capable de contrôler la prolifération des algues, des bryophytes, des ptéridophytes et des macrophytes aquatiques enracinées, dont l'action est ciblée et limitée aux fonds aquatiques. De plus, ladite méthode ou ledit produit devrait idéalement être adapté à tous les milieux aquatiques, tout en protégeant l'ensemble des organismes non visés de l'écosystème aquatique à traiter.

### Objet de l'invention

Un objet de la présente invention est par conséquent de proposer une solution pour traiter d'une part en strate de fond, les algues benthiques fixées, les bryophytes, les ptéridophytes et les macrophytes aquatiques enracinées; le traitement ne doit pas affecter significativement les organismes non visés de l'écosystème aquatique à traiter.

### Description générale de l'invention

Afin de résoudre le problème mentionné ci-dessus, la présente invention propose, dans un premier aspect, une utilisation d'une composition comprenant comme principe actif l'acide gallique dans laquelle l'acide gallique est associé à un ou plusieurs excipient(s) sélectionné(s) parmi les groupes suivants:
(1) un produit liant tel que la farine de blé, ou l'amidon soluble, ou la colophane,
(2) un produit gélifiant tel que l'agar agar, les alginates, la carraghénane, la pectine, le chitosane, la cellulose ou la gélatine,
(3) un produit épaississant tel que la gomme arabique, la gomme de guar ou la gomme de xanthane,
(4) un produit de gonflement et de délitement tel que la bentonite ou la smectite, et
(5) un produit effervescent tel que les bicarbonates,
dans laquelle l'acide gallique se trouve sous forme encapsulée ou compact, et dans laquelle la teneur en excipient(s) est comprise entre 50 % et 5 % du poids total de la composition, pour un traitement algicide ou algistatique des akinètes d'une strate d'eau de fond aquatique par la libération contrôlée du principe actif.

Dans un deuxième aspect, l'invention concerne une composition à effet algicide ou algistatique sur les akinètes d'une strate d'eau de fond aquatique, la composition comprenant comme principe actif l'acide gallique, associé à un ou plusieurs excipient(s) sélectionné(s) parmi les groupes suivants:
(1) un produit liant tel que la farine de blé, l'amidon soluble, ou la colophane,
(2) un produit gélifiant tel que l'agar agar, les alginates, la carraghénane, la pectine, le chitosane, la cellulose ou la gélatine,
(3) un produit épaississant tel que la gomme arabique, la gomme de guar ou la gomme de xanthane,
(4) un produit de gonflement et de délitement tel que la bentonite ou la smectite, et
(5) un produit effervescent tel que les bicarbonates
dans laquelle l'acide gallique se trouve sous forme encapsulée ou compactée, dans laquelle la teneur en excipient(s) est comprise entre 50 % et 5 % du poids total de la composition, et dont la densité est supérieure à 1 kg/dm³, de préférence supérieure à 1,05 kg/dm³ et de manière davantage préférée supérieure à 1,1 kg/dm³.

Un troisième aspect de l'invention concerne un procédé de fabrication de telles compositions à effet algicide ou algistatique sur les akinètes sous forme encapsulée, comprenant l'étape de conditionnement de l'acide gallique dans une capsule à enveloppe dure hydrodégradable sélectionnée parmi la gélatine ou l'amidon.

Un quatrième aspect de l'invention concerne un procédé de fabrication d'une composition à effet algicide ou algistatique sur les akinètes, selon le deuxième aspect de l'invention, sous forme de granulés ou de boulets compactés, comprenant les étapes de:
- mélange d'acide gallique, et le cas échéant du au moins un acide phénolique ou polyphénol ou alcaloïde, avec un ou des excipient(s) sélectionné(s) parmi les groupes suivants:
   (1) un produit liant tel que la farine de blé, l'amidon soluble, ou la colophane,
   (2) un produit gélifiant tel que l'agar agar, les alginates, la carraghénane, la pectine, le chitosane, la cellulose ou la gélatine,
   (3) un produit épaississant tel que la gomme arabique, la gomme de guar ou la gomme de xanthane,
   (4) un produit de gonflement et de délitement tel que la bentonite ou la smectite, et
   (5) un produit effervescent tel que les bicarbonates, et
- compression du mélange avec le ou les excipient(s) pour former des granulés ou des boulets compactés.

Finalement, selon un cinquième aspect, l'invention propose également une méthode de traitement algicide ou algistatique des akinètes d'une strate de fond aquatique comprenant la mise en contact de la composition selon le deuxième aspect de l'invention avec le milieu aquatique à traiter, la composition se déposant sur le fond aquatique, se dissolvant progressivement en libérant l'acide gallique sur quelques jours à quelques semaines.

Un premier avantage de l'invention est que l'acide gallique n'est pas un produit chimique de synthèse. Les directives Européennes dont le Règlement Européen BIOCIDE 528-2012 sont très strictes et restreignent ou interdisent l'usage en milieu naturel des produits chimiques de synthèse.

L'acide gallique en se transformant en gallates agit en combinant deux modes d'action: l'acide gallique ayant pénétré dans la cellule provoque en formant des gallates des déficiences en oligoéléments nécessaires au métabolisme végétal de la plante ciblée (déplétion du fer); les gallates dans l'eau extérieure à l'organisme empêchent la photosynthèse de se produire en colorant l'eau du milieu à traiter avec une forte absorbance des longueurs d'onde efficaces pour celle-ci.

La fabrication de boulets, de granulés, de capsules, comme décrit plus en détail ci-dessous, permet une cinétique de relargage de la substance active allant de quelques jours à quelques semaines et permet un effet ciblé au fond aquatique.

De façon surprenante, les inventeurs ont pu montrer que la majeure partie des organismes sont ciblés en traitant seulement un volume restreint d'eau de fond.

Cette approche est innovante en limitant le volume d'eau à traiter, en diminuant la quantité de substance active à utiliser et en permettant de respecter les organismes non cibles.

Dans le contexte de la présente invention, les termes suivants sont définis comme suit. Le terme « algicide » désigne tout produit ou toute substance ayant pour propriété de détruire les algues. Le terme « algistatique » désigne tout produit ou toute substance ayant pour propriété d'empêcher la croissance des espèces algales. Le terme « herbicide » désigne tout produit ou toute substance ayant pour propriété de détruire les bryophytes, les ptéridophytes et les macrophytes aquatiques (hydrophytes). Le terme « herbistatique » désigne tout produit ou toute substance ayant pour propriété d'empêcher la croissance des macrophytes aquatiques enracinées. Le terme « strate d'eau de fond aquatique » désigne l'espace entre le plancher de tous milieux aquatiques et dont la hauteur est d'au plus 30 cm. Le terme « libération contrôlée » désigne la libération de/des substances active(s) au lieu désiré tout en contrôlant la/leur vitesse de libération. Cette vitesse est telle que, selon leur conditionnement, la libération se fait sur quelques jours à quelques semaines.

De façon plus détaillée, les compositions selon l'invention comprennent comme principe actif l'acide gallique. Facultativement, la composition comprenant l'acide gallique est en outre associée à au moins un acide phénolique ou polyphénol sélectionné parmi le groupe constitué par l'acide pyrogallique, l'acide ellagique, l'acide tannique, l'acide gallotanique, l'acide caféique, la quercétine, le resvératrol, le résorcinol, le catéchol et la scopolétine ou parmi les alcaloïdes la gramine et l'hordénine.

Un des avantages de l'utilisation de l'acide gallique, de même que éventuellement du/des acides phénoliques, polyphénols ou alcaloïdes en tant que substance(s) algicide(s), algistatique(s), herbicide(s) ou herbistatique(s) est qu'il s'agit de molécules d'origine naturelle. En effet, ces molécules sont des métabolites secondaires qui sont produits par les plantes dans le but d'influencer leurs activités biologiques (interactions intraspécifiques) ou pour agir sur leur environnement (interactions interspécifiques). La présente invention met donc en œuvre le concept de l'allélopathie. L'allélopathie est l'ensemble de plusieurs interactions biochimiques directes ou indirectes positives ou négatives d'une plante sur une autre au moyen de métabolites secondaires tels que, entre autres, les phénols, les polyphénols et les alcaloïdes. L'interférence d'une plante sur une autre est attribuée principalement à des effets de compétition pour les ressources environnementales telles que l'eau, la lumière, les composés nutritifs. Les métabolites secondaires, tels que les phénols, les polyphénols et les alcaloïdes, peuvent avoir différents effets sur l'environnement d'une plante. Par exemple, certains métabolites secondaires permettent d'inhiber la germination et la croissance des plantes croissant dans leur voisinage tandis que d'autres présentent des propriétés herbicides. Les métabolites secondaires mettent en œuvre différents modes d'actions telles que l'inhibition de la photosynthèse des plantes cibles, l'inhibition du transport d'électrons ou la perturbation de l'absorption minérale par la plante. Toutes les espèces végétales ne sont pas sensibles aux mêmes métabolites secondaires.

Un des avantages de la présente invention est que l'utilisation de l'acide gallique en tant que substance algicide, algistatique, herbicide ou herbistatique permet une action précise et ciblée du macrophyte aquatique, de l'algue, du bryophyte ou du ptéridophyte à traiter. En d'autres termes, contrairement aux substances algicides, algistatiques, herbicides ou herbistatiques connues qui présentent un spectre d'action très large et sont issues de la chimie de synthèse, l'utilisation de l'acide gallique permet une action plus spécifique sur les macrophytes aquatiques, les algues, les bryophytes ou les ptéridophytes à traiter. De plus, contrairement aux substances algicides, algistatiques, herbicides ou herbistatiques d'origine chimique, l'acide gallique présente l'avantage, par sa biodégradabilité de ne pas s'accumuler dans l'environnement et par sa non bioaccumulation de ne pas se concentrer (biomagnification) dans la chaîne alimentaire et donc de ne pas contaminer les organismes non-visés de l'écosystème du milieu aquatique traité, ainsi de ne pas compromettre son équilibre naturel. La faune et la flore, à l'exception des macrophytes aquatiques, des algues, des bryophytes ou des ptéridophytes ciblées ne sont donc pas affectées par la composition selon la présente invention. Cette composition algicide, algistatique, herbicide ou herbistatique s'inscrit donc dans le cadre du développement durable. Il y a utilisation du « Biomimétisme » c'est-à-dire le choix de substances naturelles biodégradables ayant une action allélopathique renforcée par leur conditionnement et le protocole de leur usage.

L'acide gallique ou acide 3,4,5-trihydroxybenzoïque (Structure 1) est un composé organique aromatique, largement répandu dans les plantes soit sous forme libre soit comme composant des gallotanins. Il fait partie des acides-phénols (acides phénoliques) puisqu'il comporte simultanément des hydroxyles phénoliques et une fonction carboxylique. Il s'agit également d'un dérivé de l'acide benzoïque. Les sels et les acides qui en sont dérivés sont appelés gallates. Il peut être trouvé à l'état naturel et à des concentrations notables dans des galles de chênes (ou noix de galle), de sumac, d'hamamélis, les feuilles de thé, l'écorce de chêne, entre autres plantes.

Du fait de la présence de fonctions hydroxyles phénoliques et d'une fonction carboxylique, l'acide gallique présente des propriétés d'antioxydant et de pro-oxydant. Certaines conditions, dont la concentration, modifient l'activité pro-oxydante en activité anti-oxydante. Jusqu'à 280 mg/L (pH seuil de 6,8) et aux pH généralement trouvés dans les milieux aquatiques, l'acide gallique est un pro-oxydant avec comme conséquence un stress oxydant chez le végétal. Ce stress oxydant se manifeste par une accélération de l'oxydation du désoxyribose induite par des radicaux hydroxyles OH produits par Fe³⁺-H₂O₂. L'activité cytotoxique s'expliquerait par la production de dérivés réactifs de l'oxygène (DRO) ; les DRO sont des espèces chimiques capables d'oxyder les protéines, l'ADN et les membranes des cellules par peroxydation lipidique. L'acide gallique provoque également une forte croissance des radicaux superoxydes O₂⁻ mitochondriaux.

Au-dessus de 280 mg/L l'acide gallique est un antioxydant. De plus, il s'agit d'une molécule réactive étant donné qu'elle peut former par chélation des complexes avec des métaux comme le fer ou le plomb.

Une des propriétés de l'acide gallique est la formation de gallates par chélation ; le plus souvent de gallates de fer. Avec le chlorure de fer(III) (chlorure ferrique, FeCl₃), il produit du gallate de fer de couleur bleu-noir désigné bleu de Prusse. Les gallates se forment aussi par complexation avec d'autres métaux tels que Cr³⁺ et Fe²⁺. Dans un premier temps, l'acide gallique réagit avec le fer II donnant un gallate de fer II soluble dans l'eau, puis l'oxydation de celui-ci donne un gallate de fer III insoluble. Si nécessaire ou souhaité, les compositions de l'invention peuvent comprendre en plus du fer II ou III. 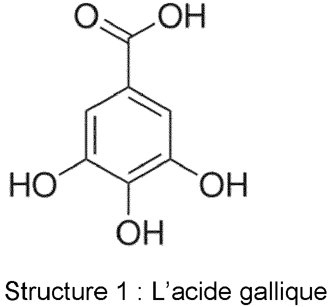
- Propriétés physicochimiques de l'acide gallique non hydraté :

   Formule : C₆H₂(OH)₃COOH

   Etat physique : solide, cristaux blancs
   Masse molaire : 170,1195 ± 0,0075 g.mol⁻¹
   Température de fusion : 210°C
   Solubilité : 11,9 g.L⁻¹ (eau 20°C)
   Masse volumique : 1,694 g.cm⁻³ à 6°C
- Propriétés physicochimiques de l'acide gallique monohydraté :

   Formule : (C₆H₂(OHhCOOH.H₂O)

   Etat physique : solide, cristaux blancs
   Masse molaire : 188,14 g.mol⁻1
   Solubilité : 15 g.L⁻¹ (eau à 20°C) avec un intérêt pour la dissolution en milieu naturel par rapport à l'acide gallique non hydraté.

En général, la teneur en acide gallique est comprise entre 50 % et 95 % du poids total de la composition, de préférence entre 70 % et 90 % du poids total de la composition, et de manière davantage préférée entre 75 % et 85 % du poids total de la composition.

Des expériences préalables ont montré qu'une composition composée uniquement d'acide gallique ou optionnellement associé à au moins un acide phénolique ou polyphénol ou alcaloïde ne se dissout pas ou très difficilement dans l'eau. Afin d'éviter ce problème, des excipients de nature différente mais sans effet algicide, algistatique, herbicide ou herbistatique sont de préférence rajoutés. Les excipients sont souhaitables pour permettre une descente rapide sur le fond des divers conditionnements, la dissolution de la ou optionnellement des substances actives et d'autre part créer une strate de densité supérieure à celle de l'eau par une action épaississante.

La composition selon l'invention comprend un ou plusieurs excipient(s) sélectionné(s) parmi un produit liant, un produit gélifiant, un produit épaississant, un produit de gonflement et de délitement, un produit effervescent.

Le terme « produit liant » désigne un produit qui sert à agglomérer en masse solide des particules solides sous forme de poudre ou de granulats. On peut citer l'amidon soluble ou la colophane, etc.

Le terme « produit gélifiant » désigne un produit permettant de donner à une substance la consistance d'un gel. Il peut s'agir d'extraits d'os d'animaux ou d'extraits de végétaux. On peut citer l'agar agar, les alginates, la carraghénane, la pectine, le chitosane, la cellulose, la gélatine, etc.

Le terme « produit épaississant » désigne un produit permettant à une substance d'avoir une certaine consistance. On peut citer la gomme arabique, la gomme de guar, la gomme de xanthane, etc.

Le terme « produit de gonflement et de délitement » désigne un produit permettant le gonflement en milieu aqueux, ainsi que le délitement satisfaisant. On peut citer la bentonite, la smectite, etc.

Le terme « produit effervescent » désigne un produit pouvant se dissoudre rapidement dans l'eau ou tout autre liquide en libérant du dioxyde de carbone. Cette libération induit l'effervescence et la fragmentation du produit. On peut citer notamment les bicarbonates.

De plus, l'acide gallique optionnellement associé à au moins un acide phénolique, polyphénol ou alcaloïde précédemment mentionnés peut être utilisé avec tous les types d'excipients décrits. De façon préférée, les excipients sont choisis parmi deux excipients appartenant à deux groupes distincts, et de préférence les excipients sont choisis parmi les produits liants et les produits épaississants.

La teneur en excipient(s) est comprise entre 50 % et 5 % du poids total de la composition, de préférence entre 30 % et 10 % du poids total de la composition, et de manière davantage préférée entre 25 % et 15 % du poids total de la composition.

La composition a une densité supérieure à 1 kg/dm³, de préférence supérieure à 1,05 kg/dm³ et de manière davantage préférée supérieure à 1,1 kg/dm³. En effet, selon l'invention, la composition doit cibler le fond du milieu aquatique à traiter avant la libération de la substance active. Pour cela sa densité doit être supérieure à celle de l'eau du milieu à traiter pour que la composition coule rapidement au fond de l'eau, de préférence avec une vitesse suffisante pour éviter une dissolution significative du ou des principes actifs avant d'atteindre le fond de l'eau. En pratique, la densité (et le cas échéant la taille) de la composition est de préférence choisie de manière à obtenir des vitesses de sédimentation supérieures à 1.10⁻⁴ m/s, de manière davantage préférée supérieures à 1 . 10⁻³m/s, en particulier supérieures à 0,01 m/s, voire supérieures à 0,1 m/s.

Un autre avantage appréciable de la présente invention est que l'excipient constitue un support pour la substance active permettant ainsi un emploi aisé de la composition. La composition peut se présenter sous des formes et volumes variés, selon la nature de l'excipient, et en particulier sous la forme de granulés, de boulets ou de capsules de masse moyenne entre 1 et 100 g, de préférence entre 2 et 50 g, de manière davantage préférée entre 10 et 30 g pour les boulets et entre 2 et 5 g pour les granulés et les capsules. De manière générale, la composition prend préférablement la forme d'objet encapsulée ou compactée associé à un ou des excipient(s) précédemment mentionné(s), de dimensions prédéterminées, ce qui offre des possibilités de conditionnement, de manipulations et de transport aisées. On comprendra également que la nature de l'excipient détermine la cinétique de relargage du/des acides phénoliques polyphénols ou alcaloïdes dans le(s) milieu(x) aquatique(s).

La composition selon l'invention constitue donc un produit algicide, algistatique, herbicide ou herbistatique appliquant le principe de l'allélopathie et permettant une mise en œuvre sur le terrain au plus près de la biomasse végétale ciblée, algues, bryophytes, ptéridophytes ou macrophytes aquatiques.

La composition algicide, algistatique, herbicide ou herbistatique peut être utilisée pour traiter tous les milieux aquatiques susceptibles de comprendre des algues, des bryophytes, des ptéridophytes ou/et des macrophytes aquatiques fixées/enracinées. La strate d'eau de fond aquatique ciblée par la composition ayant de préférence une hauteur d'au plus 30 cm, de manière davantage préférée d'au plus 20 cm, en particulier au plus 15 cm.

Ces milieux aquatiques peuvent comprendre de l'eau douce, de l'eau saumâtre ou de l'eau salée (eau de mer ou d'océan). De préférence, il s'agit de milieux aquatiques comprenant de l'eau douce. Il peut s'agir de milieux aquatiques clos tels que les mares, les étangs, les réservoirs, les retenues, les lagunes, les sablières, les lacs, les parcs et enceintes de production aquacole intensive (crustacés, poissons), les piscines et les aquariums. Les milieux aquatiques libres comme par exemple les biefs de rivières et de canaux sont aussi envisageables, en particulier en période d'étiage sévère.

Les types d'algues, des bryophytes, des ptéridophytes et des macrophytes aquatiques pouvant être traités par la composition selon la présente invention sont fixées ou enracinées. En particulier, les algues, peuvent être des Cyanobactéries communément appelées algues bleues (la nouvelle classification leur crée une appartenance propre en dehors des algues), Chlorophytes ou algues vertes dont des espèces filamenteuses subdivisées en Chlorophycées et Zygophycées ; Chromophytes ou algues brunes à jaunes subdivisées en Xanthophycées ou algues jaunes et Phéophycées ou algues brunes ; Diatomophycées (Bacillariophycées à squelette siliceux) et Chrysophycées ou algues dorées ; Pyrrhophytes ou algues également brunes subdivisées en Cryptophycées et Dinophycées (Péridiniens, Dinoflagellés) ; Rhodophytes ou algues rouges (marines) enfin Euglénophytes. Les Dinophycées (Péridiniens, Dinoflagellés) peuvent former des marées rouges avec la contamination de la production marine (ciguatera des coquillages et des poissons) présentant un risque pour la santé humaine.

Parmi les espèces algales fixées ou prisonnières dans les macrophytes aquatiques, concernées par une prolifération invasive on peut citer
- Les Cyanobactéries benthiques filamenteuses encroûtantes telles que : *Lyngbia sp., Oscillatoria sp., Phormidium sp., Stigonema.*
- Les formes de résistance des cyanobactéries du phytoplancton déposées sur le sédiment notamment pour survivre à l'hiver. Ces formes, désignées « Akinètes », sont à l'origine des efflorescences du printemps à l'automne. Les akinètes sont des cellules dormantes aux parois épaisses dérivées du grossissement d'une cellule végétative. On la trouve non seulement chez les cyanobactéries, mais également chez les algues vertes unicellulaires et filamenteuses.
- Les Diatomophycées formant des colonies benthiques telles que : *Melosira sp, Gomphonema sp* dont certaines espèces invasives.
- Les Macroalgues filamenteuses ou à frondes telles que :
   * Characées telles que *Chara sp. ; Nitella sp.*
   * Chlorophytes telles que : parmi les Zygophycées, *Mougeotia sp. ;* parmi les Chlorophycées, *Microspora sp., Ulothrix sp., Ulva sp., Cladophora sp., Rhizoclonium sp, Oedogonium sp., Spirogyra sp., Zygnema sp., Caulerpa sp.* , *Hydrodictyon. sp.*
   * Chromophytes Phéophycées telles que : *Sargassum sp.*
   * Chromophytes Xanthophycées telles que : *Vaucheria sp., Tribonema sp.*

En ce qui concerne les Bryophytes et Ptéridophytes aquatiques susceptibles de proliférer on peut citer :
- Parmi les bryophytes : *Fontinalis sp., Cinclidotus sp.*
- Parmi les ptéridophytes : *Azolla sp., Salvinia sp.*

En ce qui concerne les macrophytes aquatiques invasifs (végétaux susceptibles de proliférer en France avec un impact sur les différents usages de l'eau) créant des problèmes d'éradication pour les gestionnaires des milieux aquatiques d'eau douce on peut citer parmi les principaux genres :
- Les Potamots indigènes: *Potamogeton pectinatus* (potamot pectiné) ; *Potamogeton lucens* (potamot luisant) ; *P. crispus ; P. fluitans ; P. natans ; P. gramineus, P. perfoliatus.*
- Les Myriophylles : *Myriophyllum spicatum* (myriophylle à épi indigène), *Myriophyllum verticillatum* (myriophylle verticillé, indigène) *Myriophyllum aquaticum* (myriophylle aquatique introduite du Brésil),
- Les Cératophylles : *Ceratophyllum demersum* (cératophylle émergé indigène ou cornifle). *Ceratophyllum submersum* (cératophylle submergé).
- Les Elodées (introduites): *Elodea nuttallii* (élodée de Nuttall, origine Amérique du nord) ; *E. canadensis* (élodée du Canada) ; *E. ernstiae* (origine, Argentine). *Lagarosiphon major* (élodée crépue, origine - Afrique du sud); *Elodea densa* ou *Egeria densa* (élodée dense connue également en tant que peste d'eau, origine Amérique du sud et centrale).
- Les Renonculacées (indigènes): *Ranunculus aquatilis* (renoncule aquatique connue également en tant que grenouillette) ; *R.pennicillatus* et *R. peltatus.*
- Les Trapacées (indigène) : Les fruits et rhizomes de la châtaigne d'eau (*Trapa natans*)*.*
- Autres macrophytes rivulaires amphibies introduites : les Jussies (amérique du Sud): *Ludwigia peploïdes* (jussie rampante), *L.grandiflora* (jussie à grande fleur) et *L. uruguayensis ; Impatiens glandulifera* (balsamine ou impatiente de l'himalaya).

L'effet algicide, algistatique, herbicide ou herbistatique de l'acide gallique se traduit par une double action, d'une part, une action intracellulaire. L'acide gallique qui pénètre dans une cellule développe sa propriété chélatante ; en se complexant au fer intracellulaire, l'acide gallique bloque le métabolisme des cellules par déplétion de celui-ci. Le fer intervenant comme co-enzyme de nombreuses réactions métaboliques dans les vacuoles, les chloroplastes et les noyaux, il s'en suit la mort cellulaire. D'autre part, la formation de gallates de fer dans l'eau provoque la coloration bleu-noir dite bleu de Prusse de la strate d'eau qui forme écran aux rayons lumineux et empêche la photosynthèse de se produire.

La concentration de l'acide gallique dans la strate d'eau de fond aquatique est contrôlée en général à des valeurs allant de 0,05 mg/L à 500 mg/L, notamment à des concentrations toxiques chroniques, telles que des concentrations allant de 0,1 mg/L à 10 mg/L, de préférence allant de 0,2 mg/L à 5 mg/L, ou notamment à des concentrations toxiques aiguës, telles que des concentrations allant de 60 mg/L à 500 mg/L, la strate d'eau de fond aquatique ayant de préférence une hauteur d'au plus 30 cm, de manière davantage préférée d'au plus 20 cm, en particulier au plus 15 cm.

Le terme « toxicité aiguë » désigne un traitement à partir de la composition administrée à des concentrations supérieures à 60 mg/L sur une durée courte, de quelques jours.

Le terme « toxicité chronique » désigne un traitement à partir de la composition administrée à des concentrations inférieures à 10 mg/L sur une durée longue, de quelques semaines.

Selon une autre variante, au moins une partie de l'effet algicide, algistatique, herbicide ou herbistatique est obtenu par une coloration dans une strate d'eau de fond aquatique due à la formation de gallates de fer (III) ou d'autres métaux formant écran aux rayonnements lumineux efficaces pour la photosynthèse.

La présente invention concerne également une méthode de traitement algicide, algistatique, herbicide ou herbistatique d'une strate de fond aquatique, comprenant la mise en contact de la composition avec le milieu aquatique à traiter, la composition se déposant sur le fond aquatique, se dissolvant progressivement en libérant l'acide gallique sur quelques jours à quelques semaines de préférence dans une strate d'eau de fond aquatique ayant une hauteur d'au plus 30 cm, de manière davantage préférée d'au plus 20 cm, en particulier au plus 15 cm. De préférence, l'acide gallique forme une coloration dans une strate d'eau de fond aquatique sous forme de gallates de fer (III) ou d'autres métaux formant écran aux rayonnements lumineux

La présente invention concerne un procédé de fabrication de la composition à effet algicide, algistatique, herbicide ou herbistatique sous forme encapsulée, comprenant l'étape de conditionnement de l'acide gallique dans une capsule à coque dure hydro-dégradable de composition comprenant de l'amidon ou de la gélatine. La présente invention concerne également un procédé de fabrication sous forme de granulés ou de boulets compactés, comprenant les étapes de mélange de l'acide gallique avec le/les excipient(s) sélectionné(s) parmi les groupes de produit liant, de produit gélifiant, de produit épaississant, de produit de gonflement et de délitement, de produit effervescent et compression du mélange avec le/les excipient(s) pour former des granulés ou des boulets compactés. Le procédé comprend de préférence l'étape supplémentaire de réglage de la granulométrie des granulés, par râpage des boulets dans un granulateur à râpes équipé d'une grille de 6 mm puis tamisage sur grille de 2 mm.

Plus particulièrement, le/les polyphénol(s), acide(s) phénoliques(s) qui peut/peuvent être choisi(s) en addition de l'acide gallique sont l'acide pyrogallique, l'acide ellagique, l'acide tannique, l'acide gallotanique, l'acide caféique, la quercétine, le resvératrol, le résorcinol, le catéchol, la scopolétine et parmi les alcaloïdes la gramine et l'hordénine.

L'acide pyrogallique ou pyrogallol (Structure 2) est un triphénol. Il se présente sous la forme d'un solide cristallin incolore. Il existe à l'état naturel dans des galles de chênes (noix de galle), de sumac, d'hamamélis, les feuilles de thé, l'écorce de chêne, entre autres plantes. Les sels et esters tirés de cet acide sont appelés gallates.

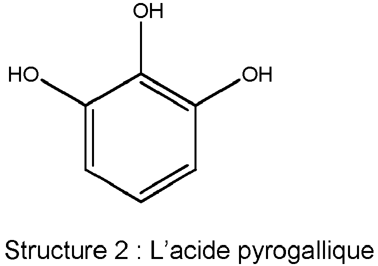

### - Propriétés physicochimiques de l'acide pyrogallique

État physique : Solide
Densité : 1,453 g/mL à 20 °C
Solubilité dans l'eau : 588,00 g/L à 20 °C

L'acide ellagique ou 2,3,7,8-Tetrahydroxy(1)benzopyrano (5,4,3-cde)-(1)benzopyran-5,10-dione (Structure 3) est un polyphénol antioxydant présent dans de nombreux fruits et légumes tels que châtaignes, framboises, fraises, canneberges, noix, noix de pécan, grenades, etc. Les plantes produisent de l'acide ellagique et du glucose qui se combinent pour former des ellagitanins qui sont des composés solubles dans l'eau. L'acide ellagique est l'un des principaux constituants de nombreuses plantes à tanin produisant des tanins connus sous le nom d'ellagitanins.

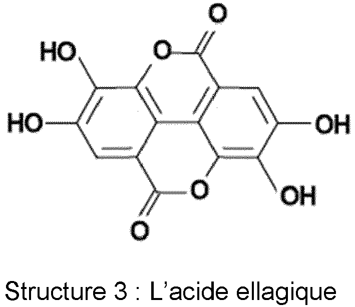

### - Propriétés physicochimiques de l'acide ellagique:

Etat physique : solide

Formule brute : C₁₄H₆O₈

Masse molaire : 302,12926 ± 0,014 g.mol⁻¹
Solubilité : <1 g.L⁻¹ à 21°C

L'acide tannique ou gallotannique ou beta-D-Glucose pentakis(3,4-dihydroxy-5-((3,4,5-trihydroxybenzoyl)oxy)benzoate) (structure 4) est un polyphénol de la famille des tanins. Il est présent dans les noix de galle, l'écorce et d'autres parties des plantes. Il est utilisé pour la clarification du vin ou de la bière et la dénaturation de l'alcool industriel. Il possède un goût astringent similaire à l'acide gallique. L'acide tannique est un dérivé de l'acide gallique, plus précisément un polyester de glucose. Il y a dix unités d'acide gallique pour un glucose. C'est un composé jaune à marron clair fortement soluble dans l'eau (un gramme par 0,35 mL d'eau). C'est un acide faible avec un pKₐ autour de 10.

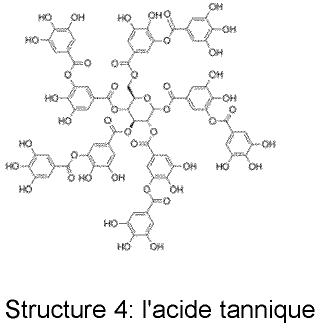

### - Propriétés physicochimiques de l'acide tannique

Etat physique : poudre amorphe jaune-brun

Formule brute : C₇₆H₅₂O₄₆

Solubilité : Soluble dans l'eau (un gramme par 0,35 mL), éthanol, acétone, alcool méthylique

L'acide caféique ou acide (E) 3-(3,4-dihydroxyphényl)prop-2-ènoïque (structure 5) est un composé organique naturellement présent dans toutes les plantes, car c'est un intermédiaire clé dans la biosynthèse de la lignine. C'est un dérivé de l'acide cinnamique qui a une structure très proche de l'acide férulique et, comme lui, il appartient aux grandes familles des phénylpropanoïdes et des acides-phénols. Il n'a aucun lien avec la caféine, mais est présent naturellement en petite quantité dans le café à l'état libre et en très grande quantité à l'état estérifié.

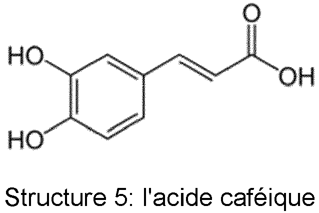

### - Propriétés physicochimiques de l'acide caféique

Etat physique : poudre cristalline jaune

Formule brute : C₉H₈O₄

Solubilité : peu soluble dans l'eau

La quercétine ou quercétol ou 3',4',5,7-pentahydroxy-2-phenylchromen-4-one ou 2-(3,4-dihydroxyphenyl)-3,5,7-trihydroxy-4H-chromen-4-one (Structure 6) est un flavonoïde de type flavonol présent chez les plantes comme métabolite secondaire. La quercétine est l'un des plus actifs des flavonoïdes. Certaines plantes médicinales doivent leur efficacité à leur fort taux en quercétine. La quercétine est également reconnue pour ses propriétés anti-oxydantes.

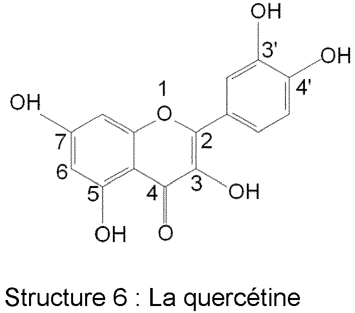

### - Propriétés physicochimiques de la quercétine:

Etat physique : poudre jaune

Formule brute : C₁₅H₁₀O₇

Solubilité : eau 60 mg.L⁻¹

Le resvératrol ou 5-[(E)-2-(4-hydroxyphényl)-éthényl] benzène-1,3-diol (structure 7) est un polyphénol de la classe des stilbènes présent dans certains fruits comme les raisins, les mûres ou les cacahuètes. On le retrouve en quantité notable dans le raisin, et donc dans le vin qui en est issu.

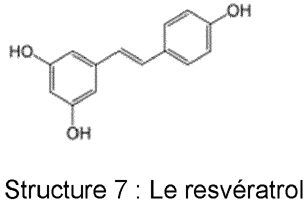

### - Propriétés physicochimiques de la resvératrol:

Etat physique : solide

Formule brute : C₁₄H₁₂O₃

Solubilité: eau ~0,03 mg·mL⁻¹, éthanol 50 mg.mL⁻¹, DMSO ~16 mg·mL⁻¹

Le résorcinol ou résorcine ou benzène-1,3-diol (structure 8) est l'isomère méta du benzènediol. C'est un diphénol (C₆H₄(OH)₂) utilisé comme antiseptique et pour la préparation de certains colorants : bleu de résorcine, vert de résorcine. Le terme est composé à partir de résine et d'orcine.

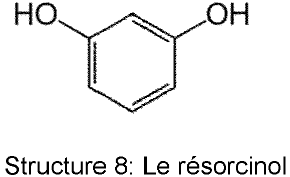

### - Propriétés physicochimiques du résorcinol:

Etat physique : cristaux blancs

Formule brute : C₆H₆O₂

Solubilité: eau 1 400 g·L⁻¹

Le catéchol (pyrocatéchol) ou benzène-1,2-diol (Structure 9) est un biphénol que l'on trouve dans certains végétaux. Il peut être obtenu à partir de l'orthochlorophénol par la réaction de fusion alcaline. Il est utilisé comme antioxydant, car il inhibe les réactions en chaîne d'oxydation en captant les radicaux. Il empêche la polymérisation spontanée de certains composés éthyléniques comme le styrène.

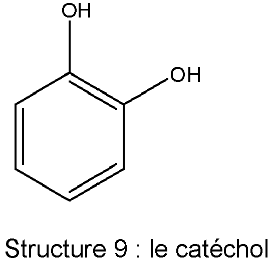

### - Propriétés physicochimiques du catéchol

État physique : Solide
Densité : 1,344 g/mL à 20 °C
Solubilité dans l'eau : 435,00 g.L⁻¹ à 20 °C

La scopolétine ou le scopolétol ou 7-hydroxy-6-méthoxychromén-2-one (structure 11) est une coumarine aglycone. C'est l'équivalent de l'esculétol dont un des substituants hydroxy est remplacé par un méthoxy (-OCH₃). Son nom vient du fait qu'on la trouve dans les racines de plantes du genre *Scopolia,* comme *Scopolia carniolica* ou *Scopolia japonica,* mais on la trouve aussi dans la chicorée sauvage, la passiflore, dans *Artemisia scoparia, Brunfelsia, Viburnum prunifolium* ou encore dans *Kleinhovia hospita.* On la trouve aussi dans certains whiskies et dans la chicorée pissenlit.

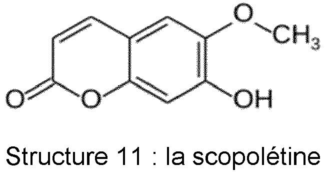

Formule brute : C₁₀HₛO₄

La gramine (appelée aussi donaxine) ou 3-(diméthylaminométhyl)-indole (structure 10) est un alcaloïde indolique de formule (C₈H₆N)CH₂N(CH₃)₂ présent dans de nombreuses plantes, en particulier chez les graminées. Ces dernières peuvent l'utiliser dans un rôle défensif, la molécule étant toxique pour de nombreux organismes.

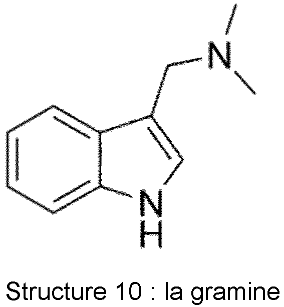

Formule brute: C₁₁H₁₄N₂

L'hordénine ou 4-[2-(diméthylamino)éthyl]phénol (structure 12) est un alcaloïde de la classe des phényléthylamines, extrait des touraillons d'orge (germes d'orge séparés du malt des brasseries). Il s'agit de l'orge *Hordenum vulgare,* de la famille des graminées. L'hordénine comporte à la fois un groupe fonctionnel acide (phénol) et un groupe fonctionnel basique (amine) de ce fait, c'est un ampholyte. Les sels courants issus de la protonation de la fonction amine sont le sulfate d'hordénine et le chlorhydrate d'hordénine.

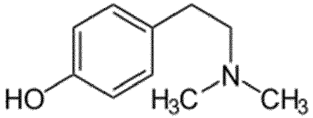

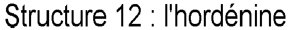

Formule brute: C₁₀H₁₅ON

Tous les acides phénoliques, polyphénols, alcaloïdes précédemment mentionnés peuvent être utilisés individuellement ou en combinaison avec l'acide gallique.

### Description des Figures

D'autres particularités et caractéristiques de l'invention ressortiront de la description détaillée de quelques modes de réalisation avantageux présentés ci-dessous, à titre d'illustration, en se référant aux figures annexées. Celles-ci montrent:
Fig. 1 : est une photo de boulets, granulés (a) et d'une capsule (b) comprenant 79,4 % d'acide gallique, 13,9 % de gomme de guar et 6,7 % d'amidon.
Fig. 2 : sont des photos montrant l'effet herbicide de l'acide gallique compacté avec de la gomme de guar et de l'amidon sur l'Elodée de Nuttall en comparaison avec une Elodée de Nuttall témoin non traitée.
La Fig. 2a représente le pied témoin avec au centre la tige principale, son bourgeon terminal et un bourgeon axillaire. De part et d'autre de la tige principale,
on aperçoit deux tiges secondaires formées par la croissance de deux bourgeons axillaires.
La Fig. 2b représente des tiges d'élodées nécrosées avec dépôts de gallate de fer à la surface du végétal et à l'intérieur des cellules.
La Fig. 2c représente un détail d'un apex de tige témoin.
La Fig. 2d représente l'apex de la tige nécrosée.
Fig. 3 : montre l'effet biocide sur le Myriophylle en épis (*Myriophyllum spicatum*); à gauche, Individu témoin; à droite, individu traité.

### Exemples

### Préparation de la composition d'acide gallique et préparation des boulets ou des granulés.

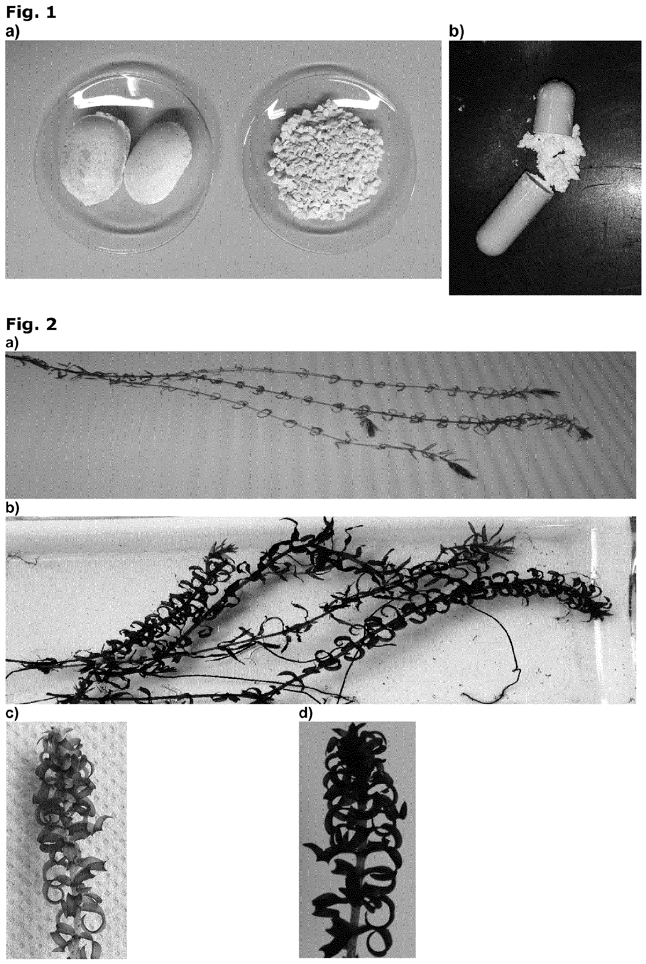

Par exemple, pour le traitement des hydrophytes enracinés, la substance active comprenant l'acide gallique est conditionnée sous forme de boulets (poids moyen de 15 g) obtenus par compression (briquetage) d'un mélange avec divers excipients permettant une cinétique de libération de la substance active. Les granulés peuvent être obtenus par râpage des boulets selon une granulométrie souhaitée et les capsules sont obtenues par encapsulation de la substance active dans une capsule à enveloppe dure hydrodégradable (Fig. 1).

L'immersion des boulets, granulés ou capsules a lieu lors de la période de reprise d'activité des plantes aquatiques, au printemps, lors du bourgeonnement à partir des parties enracinée et pérennes. Une autre application peut être effectuée en cas de faucardage ou arrachage incomplet avec pour effet le blocage d'une repousse à partir des bourgeons restant sur les tiges en dessous de la hauteur de coupe d'environ 30 cm et à partir des rhizomes restants. Le traitement est efficace au sein d'une strate de fond créée par l'un des excipients. Ce protocole permet une atteinte précoce de l'hydrophyte avec un traitement restreint à un volume d'eau de fond limité à une épaisseur de 10 à 20 cm alors qu'au maximum de la croissance les tiges peuvent atteindre la surface et dépasser, selon l'espèce ciblée, les 4 m de longueur avec de nombreux bourgeons annexes tout le long de la tige principale.

Le choix de l'excipient se fait parmi les excipients permettant la libération puis la dissolution plus ou moins rapide de la substance active dans le milieu aquatique. Les principaux excipients qui ont été testés sont l'amidon, la bentonite et la gomme de guar :
- L'amidon soluble permet la désagrégation du granulé ou du boulet avec la mise en contact de la poudre d'acide gallique avec de l'eau.
- La bentonite permet un gonflement de l'ensemble du boulet en même temps qu'une fissuration jusqu'en son cœur ce qui augmente la surface d'échange entre l'eau et la substance active.
- La gomme de guar permet un gonflement progressif du boulet de la surface vers le cœur avec formation d'un hydrogel collant le boulet au substrat.

La quantité de boulets, d'un poids moyen de 15 g, à immerger par m² est fonction de la densité de la population d'hydrophytes à traiter. Il faut atteindre, pour un effet en toxicité chronique, une concentration en acide gallique et de ses gallates d'au moins quelques mg/L sur une période de 4 à 6 semaines. Cette durée de contact entre la substance active et la plante correspond au temps mis par les bourgeons pour atteindre une longueur de 20 cm. Ce protocole permet de se placer en toxicité chronique et non en toxicité aiguë. Une prospection sur site en début de croissance printanière permet de choisir la formulation la mieux adaptée au site à traiter.

Le nombre de boulets de 15 g à immerger varie de 1 à 3 par m² en fonction de la concentration en acide gallique par rapport à celles des différents excipients.

Pour le suivi de l'évolution des concentrations en substance active en fond, deux méthodes d'analyses différentes ont été utilisées : la HPLC-UV pour l'analyse de l'acide gallique non chélate et la spectrophotométrie UV-visible pour l'analyse des gallates de fer (III). Les résultats fournis sont ceux obtenus par HPLC en laboratoire et ceux obtenus par spectrophotométrie en laboratoire et sur le terrain.

### Protocole d'analyse de l'acide gallique à partir des gallates de fer.

La connaissance, sur site traité, des concentrations en acide gallique est obtenue par une méthode indirecte en provoquant par ajout d'une solution de chlorure ferrique dans un échantillon d'eau du site traité la formation rapide en quelques minutes des gallates de fer (III). Le respect du ratio acide gallique/FeCl3 de 3:2 permet d'obtenir le maximum d'absorbance à 625 nm. L'obtention à partir de gammes étalon des équations des droites de régression permet de déduire, sur le terrain, la concentration en acide gallique à la source de la formation des gallates. Ces droites de régression sont obtenues en fonction du temps de relargage de l'acide gallique et de la température.

### Résultats sur site naturel.

L'étang de la commune de Bousse (France) est une ancienne sablière de 2 hectares en eau d'orientation Nord/Sud, d'une profondeur moyenne de 2,50 m avec un maximum de 3,50 m ; distant du cours de la Moselle d'environ 15 m avec des épisodes d'inondation ayant amené dans la gravière en plus des espèces classiques d'une eau classée en 2^{ième} catégorie, trois espèces de poissons en cours de colonisation: le silure, le gobie et le poisson chat. La Société de pêche « La Sandre » constate depuis 2010 une invasion d'hydrophytes et a pratiqué le faucardage et l'arrachage en 2014 et 2015 avec la conséquence néfaste connue d'un intense bouturage. La surface traitée est de 1000 m² soit 50 m de rive (pseudo digue) sur 20 m de distance à cette rive. Cette surface est en fait une surface rectangulaire avec 2 côtés en rive.

Quatre secteurs (SA1 à SA4) successifs ont été matérialisés par la pose de bouées sur le côté en pleine eau et par des piquets sur la rive de 20 m. Deux formulations ont été testées à savoir des granulés (SA2, SA4) ou des boulets (SA1, SA3) avec la substance active associée à deux excipients à savoir de la gomme de guar ou de l'amidon soluble.

La quantité de granulés ou de boulets à utiliser par surface de 1 m² a été calculée pour obtenir une concentration théorique maximale en substance active de 200 mg/L dans une strate d'eau de fond de 10 cm d'épaisseur et dans un temps court. Un contrôle des concentrations a été réalisé. Ce contrôle a mis en évidence que l'emploi d'excipients a permis un relargage différé et lent de la substance active ayant occasionné le maintien pendant plusieurs semaines de concentrations faibles. La toxicité engendrée relève donc d'une toxicité chronique et non d'une toxicité aiguë.

### Résultat des concentrations en acide gallique dans les échantillons d'eau de Bousse prélevés à 30 cm du fond et à différentes périodes de temps (4 h, 6 h et 48 h).

**Tableau 1**

| Secteur | 4h | 6h | T48h |
|---|---|---|---|
| SA1 | <0,05 mg/L | <0,05 mg/L | <0,05 mg/L |
| SA2 | <0,05 mg/L | <0,05 mg/L | <0,05 mg/L |
| SA3 | <0,05 mg/L | <0,05 mg/L | **0,172 mg/L** |
| SA4 | <0,05 mg/L | <0,05 mg/L | **0,213 mg/L** |

Les concentrations en acide gallique libéré des boulets et des granulés, solubilisé dans l'eau du site et non chélate sont, au fond et au cours des 48 h suivant le traitement, majoritairement inférieures au seuil de détection par HPLC-UV qui est de 0,050 mg/L. Ce seuil est uniquement dépassé, 48 h après le traitement, en secteur SA3 et SA4 dans les échantillons d'eau de fond. Ces concentrations en acide gallique sont désignées « résiduelles ». Les concentrations en acide gallique en surface sont toujours inférieures au seuil de détection par HPLC-UV.

### Résultat des concentrations en acide gallique total dans les échantillons d'eau de Bousse prélevés à 30 cm du fond et à différentes périodes de temps (4h et 48h).

Le terme « acide gallique total » désigne la somme des concentrations en acide gallique résiduel avec celles en acide gallique chélate (gallates de fer).

**Tableau 2**

| Secteur SA4 - Granulés | 4h | 48h |
|---|---|---|
| Gallates | 2,837 mg/L | 4,605 mg/L |
| Acide Gallique résiduel | <0,050 mg/L | 0,213 mg/L |
| Acide Gallique Total | 2,837 mg/L | 4,818 mg/ |

La libération de la substance active à partir des boulets (SA3) ou des granulés (SA4) est donc lente et permet d'exercer une action algicide, algistatique, herbicide ou herbistatique en exposition chronique sur plusieurs semaines avec un impact limité à la strate d'eau de fond. Ces concentrations faibles mais efficaces permettent de limiter l'action algicide, algistatique, herbicide ou herbistatique aux organismes cibles (hydrophytes) et de respecter les organismes non cibles.

### Evaluation de l'effet algicide, algistatique, herbicide ou herbistatique du traitement sur les hydrophytes.

L'objectif du traitement étant un ralentissement de la croissance (effet préventif) ou une destruction des hydrophytes en période printanière de reprise de croissance (effet curatif).

L'évaluation des effets de la substance active sur les hydrophytes en fonction des secteurs traités et de la nature de l'excipient utilisé concerne successivement :
- L'effet de la substance active sur les tiges, les bourgeons terminaux et axillaires d'élodée (*Elodea Nuttallii*) à 48 h et à 3 semaines en fonction de l'excipient utilisé (Fig. 2).
- L'effet de la substance active sur les autre hydrophytes sachant que l'élodée représente 91 % du peuplement d'hydrophytes, le Myriophylle en épis (*Myriophyllum spicatum*) 5 % et le Cératophylle (*Ceratophyllum cornutum* = *C. demersum*) 4 %.

La quantité théorique de substance active pouvant être libérée des boulets ou des granulés est la même dans tous les cas, l'excipient utilisé ne présente pas d'effet algicide, algistatique, herbicide ou herbistatique et il est de qualité alimentaire.

### Evaluation de l'effet algicide, algistatique, herbicide ou herbistatique sur les tiges et leur bourgeon terminal à 48 h et à 3 semaines selon la formulation utilisée.

Un secteur témoin et chaque secteur traité font l'objet d'un prélèvement d'un lot d'hydrophytes avec un râteau télescopique de 4 m. Après lavage doux dans l'eau du site, 21 à 25 pieds d'élodées avec leur racine, la tige principale, les tiges secondaires et les bourgeons axillaires sont pris au hasard et font l'objet de mesures et d'observations concernant l'existence, la localisation et l'importance des nécroses.

### Résultats après 48 h de traitement:

**Tableau 3:**

| **Site : Bousse** | | | **Durée du traitement : 48h** | | | | | | |
|---|---|---|---|---|---|---|---|---|---|
| **Station** | **Excipient** | | **Tige principale avec bourgeon terminal** | | | | | **Bourgeon ter.** | |
| | | **N1** | **L1** | **Nécrose** | | | | **Nécrose** | |
| | | | | **n1** | **Ln1** | **%n1/N1** | **% L nécrose** | **n2** | **%n2/N1** |
| **StREF** | **0** | 25 | 695 | 11 | 147 | 44,00% | 21,15% | 0 | 0,00% |
| **SA1** | **Boul Exc1** | 25 | 686 | 14 | 104 | 56,00% | 15,16% | 4 | 16,00% |
| **SA2** | **GR Exc2** | 25 | 553 | 8 | 36 | 32,00% | 6,51% | 2 | 8,00% |
| **SA3** | **Boul Exc2** | 25 | 625 | 13 | 178 | 52,00% | 28,48% | 6 | 24,00% |
| **SA4** | **GR Exc1** | 25 | 580 | 20 | 391 | 80,00% | 67,41% | 19 | 76,00% |

| | | | | | | | | | |
|---|---|---|---|---|---|---|---|---|---|
| Légende des abréviations : N1 : Nombre de pieds étudiés. L1 : Longueur totale des tiges des N1 pieds y compris leur bourgeon terminal (en cm). n1 : nombre de pieds présentant une nécrose. Ln1 : Longueur totale de tige présentant une nécrose (en cm). % n1/N1 : % de pieds présentant une nécrose parmi le nombre N1 de pieds étudiés. % L nécrosé : % de longueur de tige nécrosée (Ln1/L1) x 100. n2 : Nombre de pieds avec un bourgeon terminal nécrosé. % n2/N1 : % de pieds avec un bourgeon terminal nécrosé parmi la totalité des bourgeons terminaux. Ceux-ci sont aussi nombreux que les tiges étudiées. | | | | | | | | | |

### Résultat après 3 semaines de traitement:

**Tableau 4:**

| **Site : Bousse** | | | **Durée du traitement : 3 semaines** | | | | | | |
|---|---|---|---|---|---|---|---|---|---|
| **Station** | **Excipient** | | **Tige principale avec bourgeon terminal** | | | | | **Bourgeon ter.** | |
| | | **N1** | **L1** | **Nécrose** | | | | **Nécrose** | |
| | | | | **n1** | **Ln1** | **%n1/N1** | **% L nécrose** | **n2** | **%n2/N1** |
| **StREF** | **0** | 25 | 700 | 0 | 0 | 0,00% | 0,00% | 0 | 0,00% |
| **SA1** | **Boul Exc1** | 21 | 460 | 21 | 406 | 100,00% | 88,26% | 21 | 100,00% |
| **SA2** | **GR Exc2** | 24 | 735 | 24 | 649 | 100,00% | 88,30% | 24 | 100,00% |
| **SA3** | **Boul Exc2** | 21 | 530 | 21 | 462 | 100,00% | 87,17% | 21 | 100,00% |
| **SA4** | **GR Exc1** | 23 | 540 | 23 | 424 | 100,00% | 78,52% | 23 | 100,00% |

L'efficacité du traitement concernant le % de pieds présentant une nécrose rapporté au nombre de pieds étudiés à 3 semaines est identique et de 100 % quelle que soit la formulation employée. Aucune nécrose n'est constatée chez les individus du lot témoin.

L'efficacité du traitement concernant le % de nécrose du bourgeon terminal à 3 semaines est identique et de 100 % quelle que soit la formulation employée.

L'efficacité du traitement de 100 %, identique à 3 semaines, sur l'effectif de pieds nécrosés et sur celui des bourgeons terminaux nécrosés indique qu'après ce temps de présence la nécrose affecte la totalité de la plante.

### Conclusions partielles de l'effet algicide, algistatique, herbicide ou herbistatique du traitement sur les tiges et leur bourgeon terminal à 48 h et à 3 semaines.

Après 48 h de traitement l'emploi de la composition SA4 est le plus efficace avec 80 % des tiges présentant une nécrose touchant 67,4 % de leur longueur. Après 3 semaines l'effectif de pieds présentant une nécrose est de 100 % quelle que soit la formulation mais le % de longueur de tige nécrosée est significativement moindre avec la composition SA4 que pour les autres formulations (78,5 % contre en moyenne 87,9 % pour les lots SA1 à SA3). L'explication proposée est une dilution trop rapide de la substance active délivrée sous forme de granulés contenant l'excipient 1. La compression en boulets avec le même excipient (amidon) permet une dissolution lente et il en est de même avec les boulets ou granulés associés à l'excipient 2 (amidon et gomme de guar). Ces trois formulations fournissent les mêmes résultats après 3 semaines avec 100 % des tiges présentant une nécrose sur en moyenne 87,9 % de leur longueur.

A 48 h et en présence de la composition SA4, l'atteinte du bourgeon terminal concerne 76 % des pieds ; les autres formulations ont une efficacité significativement inférieure avec une moyenne de 16 % de bourgeons terminaux nécrosés. Après 3 semaines, la nécrose du bourgeon terminal concerne 100 % des pieds quelle que soit la formulation.

Pour affiner le choix de la meilleure formulation, il convient en parallèle d'étudier l'effet algicide, algistatique, herbicide ou herbistatique sur les bourgeons axillaires qui sont la source de la multiplication des rameaux secondaires portés par la tige principale d'élodée.

### Evaluation de l'effet algicide, algistatigue, herbicide ou herbistatique sur les autre hydrophytes : le Myriophylle en épis (Myriophyllum spicatum) et le Cératophylle (Ceratophyllum cornutum).

Deux autres hydrophytes sont associées à l'élodée de Nuttall, le Myriophylle en épis (*Myriophyllum spicatum*) et le Cératophylle (*Ceratophyllum cornutum*) qui représentent respectivement 5 % et 4 % du peuplement.

Compte tenu de la faible présence de ces deux espèces par rapport à la dominance de l'Elodée, l'évaluation de l'efficacité du traitement a été faite en regroupant les données de l'ensemble des individus récoltés sur tous les secteurs traités et quelle que soit la formulation employée.

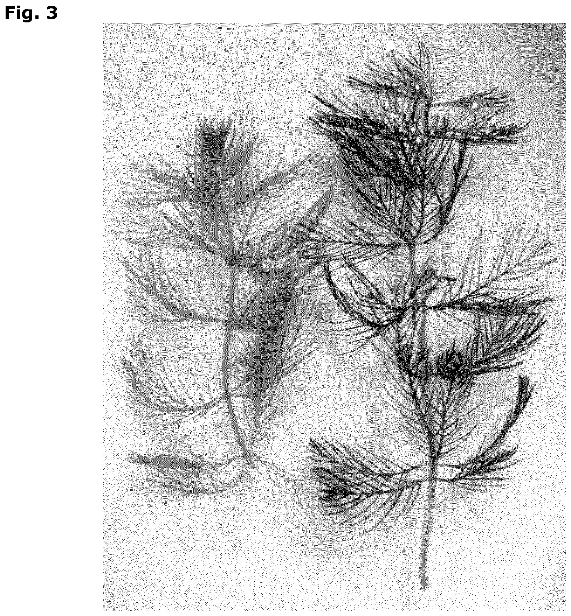

Les tiges de Myriophylle peuvent atteindre 1,50 m de longueur avec une moyenne de 0,87 m pour les tiges étudiées. L'efficacité biocide est en moyenne de 97,3 % pour les tiges y compris le bourgeon terminal. L'effectif moyen de bourgeon axillaire est de 1 par tige avec 100 % d'efficacité biocide. L'effet biocide sur le Myriophylle en épis (*Myriophyllum spicatum*) est illustré à la Fig. 3; à gauche, individu témoin; à droite, individu traité.

Les tiges de Cératophylle peuvent atteindre 1,10 m de longueur avec une moyenne de 0,69 m pour les tiges étudiées. L'efficacité algicide, algistatique, herbicide ou herbistatique est en moyenne de 52,8 % pour les tiges y compris le bourgeon terminal. L'effectif moyen de bourgeon axillaire est de 2,2 par tige avec 47,3 % d'efficacité algicide, algistatique, herbicide ou herbistatique.

Le traitement est donc actif sur les deux espèces d'hydrophytes associées à l'Elodée avec une efficacité supérieure pour le Myriophylle par rapport au Cératophylle.

### Conclusion générale sur l'évaluation de l'effet algicide, algistatique, herbicide ou herbistatique du traitement.

Quelle que soit la formulation utilisée, l'efficacité algicide, algistatique, herbicide ou herbistatique du traitement peut être évaluée après trois semaines d'effet.

En ce qui concerne les pieds avec leur bourgeon terminal la prise en compte des critères de % de pieds et de % de bourgeons terminaux nécrosés ne permet pas de privilégier une formulation par rapport aux autres car l'efficacité algicide, algistatique, herbicide ou herbistatique est identique et de 100 %. La prise en compte du critère de la longueur de tige nécrosée permet de distinguer la formulation en granulés contenant l'excipient de la composition SA4 des trois autres du fait de sa moindre efficacité (78,5 % contre en moyenne 87,9 %).

En ce qui concerne les bourgeons axillaires dont le rôle est prépondérant dans la capacité d'accroissement de la biomasse et de bouturage, la prise en compte du critère de % de bourgeons nécrosés permet de distinguer les granulés (composition SA2 et SA4) des boulets (composition SA1 et SA3) du fait de leur moindre efficacité à savoir en moyenne 31,8 % contre 42,3 %.

En considérant en dernier critère le % de pieds portant des bourgeons axillaires nécrosés le traitement avec des boulets contenant l'excipient de la composition SA1 se distingue de celui avec des boulets contenant l'excipient de la composition SA3 du fait de sa moindre efficacité à savoir 33,3 % contre 42,86 %.

Indépendamment de la formulation employée, le traitement est d'une efficacité globale (tige et bourgeons) de 100 % sur le Myriophylle et d'une efficacité globale (tige et bourgeons) de 50 % sur le Cératophylle.

## Revendications

1. Utilisation d'une composition comprenant comme principe actif l'acide gallique dans laquelle l'acide gallique associé à un ou plusieurs excipient(s) sélectionné(s) parmi les groupes suivant:
(1) un produit liant tel que la farine de blé, l'amidon soluble, ou la colophane,
(2) un produit gélifiant tel que l'agar agar, les alginates, la carraghénane, la pectine, le chitosane, la cellulose ou la gélatine,
(3) un produit épaississant tel que la gomme arabique, la gomme de guar ou la gomme de xanthane,
(4) un produit de gonflement et de délitement tel que la bentonite ou la smectite, et
(5) un produit effervescent tel que les bicarbonates,
dans laquelle l'acide gallique se trouve sous forme encapsulée ou compactée, et dans laquelle la teneur en excipient(s) est comprise entre 50 % et 5 % du poids total de la composition, pour un traitement algicide ou algistatique des akinètes d'une strate d'eau de fond aquatique par la libération contrôlée du principe actif, les excipients étant choisis de préférence parmi deux excipients appartenant à deux groupes distincts, et de manière davantage préférée les excipients sont choisis parmi les groupes (1) et (3).

2. Utilisation d'une composition selon la revendication 1 dans laquelle l'acide gallique est associé à au moins un acide phénolique ou polyphénol sélectionné parmi le groupe constitué par l'acide pyrogallique, l'acide ellagique, l'acide tannique, l'acide gallotanique, l'acide caféique, la quercétine, le resvératrol, le résorcinol, le catéchol, la scopolétine ou au moins un alcaloïde sélectionné parmi la gramine et l'hordénine.

3. Utilisation de la composition selon la revendication 1 ou 2, dans laquelle la densité de la composition est supérieure à 1 kg/dm³, de préférence supérieure à 1,05 kg/dm³ et de manière davantage préférée supérieure à 1,1 kg/dm³.

4. Utilisation de la composition selon l'une des revendications 1 à 3, se présentant sous forme de granulés, de boulets ou de capsules d'une masse moyenne entre 1 et 100 g, de préférence entre 2 et 50 g, de manière davantage préférée entre 10 et 30 g pour les boulets et entre 2 et 5 g pour les granulés et les capsules.

5. Utilisation de la composition selon l'une des revendications 1 à 4, dans laquelle la teneur en acide gallique est comprise entre 50 % et 95 % du poids total de la composition, de préférence entre 70 % et 90 % du poids total de la composition, et de manière davantage préférée entre 75 % et 85 % du poids total de la composition, et/ou dans laquelle la teneur en excipient(s) est comprise entre 30 % et 10 % du poids total de la composition, et de manière davantage préférée entre 25 % et 15 % du poids total de la composition.

6. Utilisation de la composition selon l'une des revendications 1 à 5, dans laquelle la concentration de l'acide gallique total dans la strate d'eau de fond aquatique est contrôlée à des valeurs allant de 0,05 mg/L à 500 mg/L, notamment à des concentrations toxiques chroniques, telles que des concentrations allant de 0,1 mg/L à 10 mg/L, de préférence allant de 0,2 mg/L à 5 mg/L, ou notamment à des concentrations toxiques aiguës, telles que des concentrations allant de 60 mg/L à 500 mg/L, la strate de fond aquatique ayant de préférence une hauteur d'au plus 30 cm, de manière davantage préférée d'au plus 20 cm, en particulier au plus 15 cm, au moins une partie de l'effet algicide ou algistatique étant de préférence obtenu par une coloration dans une strate d'eau de fond aquatique due à la formation de gallates de fer ou d'autres métaux formant écran aux rayonnements lumineux.

7. Composition à effet algicide ou algistatique sur les akinètes d'une strate d'eau de fond aquatique, la composition comprenant comme principe actif l'acide gallique, associé à un ou plusieurs excipient(s) sélectionné(s) parmi les groupes suivants:
(1) un produit liant tel que la farine de blé, l'amidon soluble, ou la colophane,
(2) un produit gélifiant tel que l'agar agar, la carraghénane, la pectine, le chitosane, la cellulose ou la gélatine,
(3) un produit épaississant tel que la gomme arabique, la gomme de guar ou la gomme de xanthane,
(4) un produit de gonflement tel que la bentonite ou la smectite, et
(5) un produit effervescent tel que les bicarbonates,
dans laquelle l'acide gallique se trouve sous forme encapsulée ou compactée, dans laquelle la teneur en excipient(s) est comprise entre 50 % et 5 % du poids total de la composition et dont la densité est supérieure à 1 kg/dm³, de préférence supérieure à 1,05 kg/dm³ et de manière davantage préférée supérieure à 1,1 kg/dm³, les excipients étant de préférence choisis parmi deux excipients appartenant à deux groupes distincts, et de manière davantage préférée les excipients sont choisis parmi les groupes (1) et (3).

8. Composition selon la revendication 7, dans laquelle l'acide gallique est associé à au moins un acide phénolique ou polyphénol sélectionné parmi le groupe constitué par l'acide pyrogallique, l'acide ellagique, l'acide tannique, l'acide gallotanique, l'acide caféique, la quercétine, le resvératrol, le résorcinol, le catéchol, la scopolétine ou au moins un alcaloïde sélectionné parmi la gramine et l'hordénine.

9. Composition selon l'une des revendications 7 ou 8, se présentant sous forme de granulés, de boulets ou de capsules d'une masse moyenne entre 1 et 100 g, de préférence entre 2 et 50 g, de manière davantage préférée entre 5 et 30 g pour les boulets et entre 2 et 5 g pour les granulés et les capsules.

10. Composition selon l'une des revendications 7 à 9, dans laquelle la teneur de l'acide gallique associé à au moins un acide phénolique ou polyphénol ou alcaloïde est comprise entre 50 % et 95 % du poids total de la composition, de préférence entre 70 % et 90 % du poids total de la composition, et de manière davantage préférée entre 75 % et 85 % du poids total de la composition, et/ou dans laquelle la teneur en excipient(s) est comprise entre 30 % et 10 % du poids total de la composition, et de manière davantage préférée entre 25 % et 15 % du poids total de la composition.

11. Procédé de fabrication d'une composition à effet algicide ou algistatique sur les akinètes selon l'une des revendications 7 à 10 sous forme encapsulée, comprenant l'étape de conditionnement de l'acide gallique dans une capsule à enveloppe dure hydrodégradable sélectionnée parmi la gélatine ou l'amidon.

12. Procédé de fabrication d'une composition à effet algicide ou algistatique sur les akinètes, selon l'une des revendications 7 à 10, sous forme de granulés ou de boulets compactés, comprenant les étapes de:
- mélange de l'acide gallique, et le cas échéant du au moins un acide phénolique ou polyphénol ou alcaloïde, avec un ou des excipient(s) sélectionné(s) parmi les groupes suivants:
(6) un produit liant tel que la farine de blé, l'amidon soluble, ou la colophane,
(7) un produit gélifiant tel que l'agar agar, les alginates, la carraghénane, la pectine, le chitosane, la cellulose ou la gélatine,
(8) un produit épaississant tel que la gomme arabique, la gomme de guar ou la gomme de xanthane,
(9) un produit de gonflement et de délitement tel que la bentonite ou la smectite, et
(10) un produit effervescent tel que les bicarbonates, et
- compression du mélange avec le ou les excipient(s) pour former des granulés ou des boulets compactés.

13. Procédé selon la revendication 12 comprenant l'étape supplémentaire de réglage de la granulométrie des granulés par râpage des boulets dans un granulateur à râpes puis tamisage.

14. Méthode de traitement algicide ou algistatique des akinètes d'une strate de fond aquatique, comprenant la mise en contact de la composition selon l'une quelconque des revendications 7 à 10 avec le milieu aquatique à traiter, la composition se déposant sur le fond aquatique, se dissolvant progressivement en libérant l'acide gallique sur quelques jours à quelques semaines de préférence dans une strate d'eau de fond aquatique ayant une hauteur d'au plus 30 cm, de manière davantage préférée d'au plus 20 cm, en particulier au plus 15 cm.

15. Méthode de traitement algicide ou algistatique selon la revendication 14, dans laquelle l'acide gallique forme une coloration dans une strate d'eau de fond aquatique sous forme de gallates de fer ou d'autres métaux formant écran aux rayonnements lumineux.

## Patentansprüche

1. Verwendung einer Zusammensetzung, die Gallussäure als Wirkstoff umfasst, wobei die Gallussäure mit einem der mehreren Hilfsstoffen assoziiert ist, die aus den folgenden Gruppen ausgewählt sind:
(1) einem Bindemittel, wie Weizenmehl, lösliche Stärke oder Kolophonium,
(2) einem Geliermittel, wie Agar-Agar, Alginate, Carrageen, Pektin, Chitosan, Cellulose oder Gelatine,
(3) einem Verdickungsmittel, wie Gummiarabikum, Guargummi oder Xanthan,
(4) einem Bläh- und Abbaumittel, wie Bentonit oder Smektit, und
(5) einem Schäummittel, wie Bicarbonate,
wobei die Gallussäure sich in eingekapselter oder verdichteter Form befindet und wobei der Gehalt an Hilfsstoff(en) zwischen 50 % und 5 % des Gesamtgewichts der Zusammensetzung liegt, für eine algizide oder algistatische Behandlung von Akineten einer Wasserschicht eines aquatischen Bodens durch kontrollierte Freisetzung des Wirkstoffs, wobei die Hilfsstoffe vorzugsweise aus zwei Hilfsstoffen ausgewählt sind, die zu zwei unterschiedlichen Gruppen gehören, und die Hilfsstoffe auf vorteilhafte Weise bevorzugt aus den Gruppen (1) und (3) ausgewählt sind.

2. Verwendung einer Zusammensetzung nach Anspruch 1, wobei die Gallussäure mit mindestens einer Phenolsäure oder einem Polyphenol, die bzw. das aus der Gruppe bestehend aus Pyrogallussäure, Ellagsäure, Gerbsäure, Gallusgerbsäure, Kaffeesäure, Quercetin, Resveratrol, Resorcin, Catechin, Scopoletin ausgewählt ist, oder mindestens einem Alkaloid, das aus Gramin und Hordenin ausgewählt ist, assoziiert ist.

3. Verwendung der Zusammensetzung nach Anspruch 1 oder 2, wobei die Dichte der Zusammensetzung höher als 1 kg/dm³, vorzugsweise höher als 1,05 kg/dm³ und auf vorteilhafte Weise bevorzugt höher als 1,1 kg/dm³ ist.

4. Verwendung der Zusammensetzung nach einem der Ansprüche 1 bis 3, die in der Form von Granulat, Kugeln oder Kapseln mit einem durchschnittlichen Gewicht zwischen 1 und 100 g, vorzugsweise zwischen 2 und 50 g, auf vorteilhafte Weise bevorzugt zwischen 10 und 30 g für die Kugeln und zwischen 2 und 5 g für das Granulat und die Kapseln dargereicht wird.

5. Verwendung der Zusammensetzung nach einem der Ansprüche 1 bis 4, wobei der Gehalt an Gallussäure zwischen 50 % und 95 % des Gesamtgewichts der Zusammensetzung, vorzugsweise zwischen 70 % und 90 % des Gesamtgewichts der Zusammensetzung und auf vorteilhafte Weise bevorzugt zwischen 75 % und 85 % des Gesamtgewichts der Zusammensetzung liegt und/oder wobei der Gehalt an Hilfsstoff(en) zwischen 30 % und 10 % des Gesamtgewichts der Zusammensetzung und auf vorteilhafte Weise bevorzugt zwischen 25 % und 15 % des Gesamtgewichts der Zusammensetzung liegt.

6. Verwendung der Zusammensetzung nach einem der Ansprüche 1 bis 5, wobei die Gesamtkonzentration der Gallussäure in der Wasserschicht des aquatischen Bodens auf Werte, die von 0,05 mg/L bis 500 mg/L reichen, insbesondere chronische toxische Konzentrationen, wie Konzentrationen, die von 0,1 mg/L bis 10 mg/L reichen, vorzugsweise von 0,2 mg/L bis 5 mg/L reichen, oder insbesondere akute toxische Konzentrationen, wie Konzentrationen, die von 60 mg/L bis 500 mg/L reichen, gesteuert wird, wobei die Wasserschicht des aquatischen Bodens vorzugsweise eine Höhe von höchstens 30 cm, auf vorteilhafte Weise bevorzugt höchstens 20 cm, insbesondere höchstens 15 cm aufweist, wobei mindestens ein Teil der algiziden oder algistatischen Wirkung vorzugsweise durch eine Verfärbung in einer Wasserschicht eines aquatischen Bodens aufgrund der Bildung von Eisengallaten oder anderen Metallen, die einen Schutz gegen Lichtstrahlen bilden, erhalten wird.

7. Zusammensetzung mit algizider oder algistatischer Wirkung auf Akineten einer Wasserschicht eines aquatischen Bodens, wobei die Zusammensetzung Gallussäure als Wirkstoff umfasst, die mit einem der mehreren Hilfsstoffen assoziiert ist, die aus den folgenden Gruppen ausgewählt sind:
(1) einem Bindemittel, wie Weizenmehl, lösliche Stärke oder Kolophonium,
(2) einem Geliermittel, wie Agar-Agar, Carrageen, Pektin, Chitosan, Cellulose oder Gelatine,
(3) einem Verdickungsmittel, wie Gummiarabikum, Guargummi oder Xanthan,
(4) einem Blähmittel, wie Bentonit oder Smektit, und
(5) einem Schäummittel, wie Bicarbonate,
wobei die Gallussäure sich in eingekapselter oder verdichteter Form befindet, wobei der Gehalt an Hilfsstoff(en) zwischen 50 % und 5 % des Gesamtgewichts der Zusammensetzung liegt und deren Dichte höher als 1 kg/dm³, vorzugsweise höher als 1,05 kg/dm³ und auf vorteilhafte Weise bevorzugt höher als 1,1 kg/dm³ ist, wobei die Hilfsstoffe vorzugsweise aus zwei Hilfsstoffen ausgewählt sind, die zu zwei unterschiedlichen Gruppen gehören, und die Hilfsstoffe auf vorteilhafte Weise bevorzugt aus den Gruppen (1) und (3) ausgewählt sind.

8. Zusammensetzung nach Anspruch 7, wobei die Gallussäure mit mindestens einer Phenolsäure oder einem Polyphenol, die bzw. das aus der Gruppe bestehend aus Pyrogallussäure, Ellagsäure, Gerbsäure, Gallusgerbsäure, Kaffeesäure, Quercetin, Resveratrol, Resorcin, Catechin, Scopoletin ausgewählt ist, oder mindestens einem Alkaloid, das aus Gramin und Hordenin ausgewählt ist, assoziiert ist.

9. Zusammensetzung nach einem der Ansprüche 7 oder 8, die in der Form von Granulat, Kugeln oder Kapseln mit einem durchschnittlichen Gewicht zwischen 1 und 100 g, vorzugsweise zwischen 2 und 50 g, auf vorteilhafte Weise bevorzugt zwischen 5 und 30 g für die Kugeln und zwischen 2 und 5 g für das Granulat und die Kapseln dargereicht wird.

10. Zusammensetzung nach einem der Ansprüche 7 bis 9, wobei der Gehalt an Gallussäure, die mit mindestens einer Phenolsäure oder einem Polyphenol oder einem Alkaloid assoziiert ist, zwischen 50 % und 95 % des Gesamtgewichts der Zusammensetzung, vorzugsweise zwischen 70 % und 90 % des Gesamtgewichts der Zusammensetzung und auf vorteilhafte Weise bevorzugt zwischen 75 % und 85 % des Gesamtgewichts der Zusammensetzung liegt und/oder wobei der Gehalt an Hilfsstoff(en) zwischen 30 % und 10 % des Gesamtgewichts der Zusammensetzung und auf vorteilhafte Weise bevorzugt zwischen 25 % und 15 % des Gesamtgewichts der Zusammensetzung liegt.

11. Verfahren zur Herstellung einer Zusammensetzung mit algizider oder algistatischer Wirkung auf Akinete nach einem der Ansprüche 7 bis 10 in eingekapselter Form, umfassend den Schritt des Packens von Gallussäure in eine Kapsel mit harter wasserzersetzbarer Hülle, die aus Gelatine oder Stärke ausgewählt ist.

12. Verfahren zur Herstellung einer Zusammensetzung mit algizider oder algistatischer Wirkung auf Akinete nach einem der Ansprüche 7 bis 10 in der Form von verdichtetem Granulat oder verdichteten Kugeln, umfassend die Schritte:
- Mischen von Gallussäure und gegebenenfalls mindestens einer Phenolsäure oder einem Polyphenol oder einem Alkaloid mit einem oder mehreren Hilfsstoffen, die aus den folgenden Gruppen ausgewählt sind:
(1) einem Bindemittel, wie Weizenmehl, lösliche Stärke oder Kolophonium,
(2) einem Geliermittel, wie Agar-Agar, Alginate, Carrageen, Pektin, Chitosan, Cellulose oder Gelatine,
(3) einem Verdickungsmittel, wie Gummiarabikum, Guargummi oder Xanthan,
(4) einem Bläh- und Abbaumittel, wie Bentonit oder Smektit, und
(5) einem Schäummittel, wie Bicarbonate, und
- Verpressen des Gemischs mit dem oder den Hilfsstoffen zum Bilden von verdichtetem Granulat oder verdichteten Kugeln.

13. Verfahren nach Anspruch 12, umfassend den zusätzlichen Schritt des Einstellens der Korngrößenverteilung des Granulats durch Schleifen der Kugeln in einem Schleifgranulator und dann Sieben.

14. Methode zur algiziden oder algistatischen Behandlung von Akineten einer Wasserschicht eines aquatischen Bodens, umfassend das Inkontaktbringen der Zusammensetzung nach einem der Ansprüche 7 bis 10 mit dem zu behandelnden aquatischen Medium, wobei die Zusammensetzung sich auf dem aquatischen Boden ablagert, sich allmählich unter Freisetzen der Gallussäure in mehreren Tagen bis mehreren Wochen vorzugsweise in einer Wasserschicht eines aquatischen Bodens mit einer Höhe von höchstens 30 cm, auf vorteilhafte Weise bevorzugt höchstens 20 cm, insbesondere höchstens 15 cm auflöst.

15. Methode zur algiziden oder algistatischen Behandlung nach Anspruch 14, wobei die Gallussäure eine Verfärbung in einer Wasserschicht eines aquatischen Bodens in der Form von Eisengallaten oder anderen Metallen, die einen Schutz gegen Lichtstrahlen bilden, bildet.

## Claims

1. A use of a composition comprising gallic acid as an active ingredient wherein gallic acid is associated with one or more excipient(s) selected from the following groups:
(1) a binder product such as wheat flour, soluble starch or rosin,
(2) a gelling product such as agar-agar, alginates, carrageenan, pectin, chitosan, cellulose or gelatin,
(3) a thickening product such as gum arabic, guar gum or xanthan gum,
(4) a swelling and disintegrating product such as bentonite or smectite, and
(5) an effervescent product such as bicarbonates,
wherein gallic acid is in encapsulated or compacted form, and wherein the content of excipient(s) is comprised between 50% and 5% of the total weight of the composition, for an algicidal or algistatic treatment of akinetes of an aquatic bottom stratum of water by the controlled release of the active ingredient, the excipients being preferably chosen from two excipients belonging to two distinct groups, and more preferably the excipients are chosen from the groups (1) and (3).

2. The use of a composition according to claim 1 wherein gallic acid is associated with at least one phenolic acid or polyphenol selected from the group consisting of pyrogallic acid, ellagic acid, tannic acid, gallotanic acid, caffeic acid, quercetin, resveratrol, resorcinol, catechol, scopoletin or at least one alkaloid selected from gramine and hordenine.

3. The use of the composition according to claim 1 or 2, wherein the density of the composition is greater than 1 kg/dm³, preferably greater than 1.05 kg/dm³ and more preferably greater than 1.1 kg/dm³.

4. The use of the composition according to any of claims 1 to 3, being in the form of granules, balls or capsules of an average mass between 1 and 100 g, preferably between 2 and 50 g, more preferably between 10 and 30 g for the balls and between 2 and 5 g for the granules and the capsules.

5. The use of the composition according to any of claims 1 to 4, wherein gallic acid content is comprised between 50% and 95% of the total weight of the composition, preferably between 70% and 90% of the total weight of the composition, and more preferably between 75% and 85% of the total weight of the composition, and/or wherein the content of excipient(s) is comprised between 30% and 10% of the total weight of the composition, and more preferably between 25% and 15% of the total weight of the composition.

6. The use of the composition according to any of claims 1 to 5, wherein the concentration of total gallic acid in the aquatic bottom stratum of water is controlled to values ranging from 0.05 mg/L to 500 mg/L, in particular to chronic toxic concentrations, such as concentrations ranging from 0.1 mg/L to 10 mg/L, preferably ranging from 0.2 mg/L to 5 mg/L, or in particular to acute toxic concentrations, such as concentrations ranging from 60 mg/L to 500 mg/L, the aquatic bottom stratum preferably having a height of at most 30 cm, more preferably at most 20 cm, in particular at most 15 cm, at least one part of the algicidal or algistatic effect preferably being obtained by coloration in an aquatic bottom stratum of water due to the formation of gallates of iron or other metals that shield against light rays.

7. A composition having an algicidal or algistatic effect on akinetes of an aquatic bottom stratum of water, the composition comprising, as an active ingredient, gallic acid associated with one or more excipient(s) selected from the following groups:
(1) a binder product such as wheat flour, soluble starch or rosin,
(2) a gelling product such as agar-agar, carrageenan, pectin, chitosan, cellulose or gelatin,
(3) a thickening product such as gum arabic, guar gum or xanthan gum,
(4) a swelling product such as bentonite or smectite, and
(5) an effervescent product such as bicarbonates,
wherein gallic acid is in encapsulated or compacted form, wherein the content of excipient(s) is comprised between 50% and 5% of the total weight of the composition and whose density is greater than 1 kg/dm³, preferably greater than 1.05 kg/dm³ and more preferably greater than 1.1 kg/dm³, the excipients being preferably chosen from two excipients belonging to two distinct groups, and more preferably the excipients are chosen from the groups (1) and (3).

8. The composition according to claim 7, wherein gallic acid is associated with at least one phenolic acid or polyphenol selected from the group consisting of pyrogallic acid, ellagic acid, tannic acid, gallotanic acid, caffeic acid, quercetin, resveratrol, resorcinol, catechol, scopoletin or at least one alkaloid selected from gramine and hordenine.

9. The composition according to claim 7 or 8, being in the form of granules, balls or capsules of an average mass between 1 and 100 g, preferably between 2 and 50 g, more preferably between 10 and 30 g for the balls and between 2 and 5 g for the granules and the capsules.

10. The composition according to any of claims 7 to 9, wherein the content of gallic acid associated with at least one phenolic acid or polyphenol or alkaloid is comprised between 50% and 95% of the total weight of the composition, preferably between 70% and 90% of the total weight of the composition, and more preferably between 75% and 85% of the total weight of the composition, and/or wherein the content of excipient(s) is comprised between 30% and 10% of the total weight of the composition, and more preferably between 25% and 15% of the total weight of the composition.

11. A process for manufacturing a composition having an algicidal or algistatic effect on akinetes according to any of claims 7 to 10 in encapsulated form, comprising the step of conditioning gallic acid in a water-degradable hard-shell capsule selected from gelatin or starch.

12. A process for manufacturing a composition having an algicidal or algistatic effect on akinetes, according to any of claims 7 to 10, in form of compacted granules or balls, comprising the steps of:
- mixing the gallic acid, and where appropriate at least one phenolic acid or polyphenol or alkaloid with one or more excipient(s) selected from the following groups:
(6) a binder product such as wheat flour, soluble starch or rosin,
(7) a gelling product such as agar-agar, alginates, carrageenan, pectin, chitosan, cellulose or gelatin,
(8) a thickening product such as gum arabic, guar gum or xanthan gum,
(9) a swelling and disintegrating product such as bentonite or smectite, and
(10) an effervescent product such as bicarbonates, and
- compressing the mixture with the excipient(s) to form compacted granules or balls.

13. The process according to claim 12 comprising the additional step of adjusting the particle size of the granules by grating the balls in a grater granulator then screening.

14. A method of algicidal or algistatic treatment of akinetes of an aquatic bottom stratum, comprising contacting the composition according to any one of claims 7 to 10 with the aquatic environment to be treated, the composition being deposited on the aquatic bottom, being gradually dissolved by releasing gallic acid for a few days to a few weeks preferably in an aquatic bottom stratum of water having a height of at most 30 cm, more preferably at most 20 cm, in particular at most 15 cm.

15. The method of algicidal or algistatic treatment according to claim 14, wherein gallic acid forms a coloration in an aquatic bottom stratum of water in the form of gallates of iron or other metals that shield against light rays.
